Europäisches Patentamt

European Patent Office

Office européen des brevets

(19)

(11) Numéro de publication : **0 094 884**
**B1**

(12) **FASCICULE DE BREVET EUROPÉEN**

(45) Date de publication du fascicule du brevet :
20.08.86

(21) Numéro de dépôt : 83400968.0

(22) Date de dépôt : 11.05.83

(51) Int. Cl.⁴ : **G 05 D 21/02, G 21 C 19/30**

(54) **Procédé et dispositif de réglage du pH de l'eau de refroidissement d'un réacteur nucléaire à eau sous pression.**

(30) Priorité : **12.05.82 FR 8208218**

(43) Date de publication de la demande :
**23.11.83 Bulletin 83/47**

(45) Mention de la délivrance du brevet :
**20.08.86 Bulletin 86/34**

(84) Etats contractants désignés :
**BE CH DE GB IT LI SE**

(56) Documents cités :
**CH-A- 376 444
FR-A- 2 100 206
FR-A- 2 212 612
FR-A- 2 272 392**

(73) Titulaire : **FRAMATOME ET CIE.
Tour Fiat 1, Place de la Coupole
F-92400 Courbevoie (FR)**

(72) Inventeur : **Saurin, Pierre
9 le Manoir de Denouval
F-78750 Andresy (FR)**
Inventeur : **Trottier, Jean-Pierre
11 rue Branly
F-92220 Bagneux (FR)**
Inventeur : **Nordmann, Francis
7 mail des Catalpas
F-78390 Bois D'Arcy (FR)**

(74) Mandataire : **Lavoix, Jean et al
c/o Cabinet Lavoix 2, Place D'Estienne D'Orves
F-75441 Paris Cedex 09 (FR)**

Jouve, 18, rue St-Denis, 75001 Paris, France

## Description

L'invention concerne un procédé de réglage du pH de l'eau de refroidissement d'un réacteur nucléaire à eau sous pression.

L'eau de refroidissement des réacteurs nucléaires à eau sous pression remplissant le circuit primaire de ces réacteurs est généralement à une température voisine de 320° et à une pression voisine de 155 bars, pendant le fonctionnement normal du réacteur.

On introduit dans cette eau de refroidissement, au cours du fonctionnement du réacteur, des quantités variables d'acide borique ou d'eau pour faire varier la concentration de cette eau en bore qui est un élément absorbant les neutrons. On agit ainsi sur la réactivité du cœur du réacteur plongé dans l'eau de refroidissement, à l'intérieur de la cuve du réacteur.

Pour éviter au maximum la corrosion des éléments du circuit primaire, on introduit également dans l'eau de refroidissement du réacteur des quantités variables d'une base de conditionnement telle que la lithine.

Dans l'exploitation des réacteurs nucléaires à eau sous pression, il convient de limiter la radio-activité des éléments du circuit primaire à une valeur la plus faible possible, pour éviter des rejets d'effluents radio-actifs en quantités importantes et pour limiter les doses de radio-activité reçues par le personnel d'exploitation et d'entretien du réacteur.

La radio-activité du circuit primaire du réacteur résulte d'une part de la présence de produits de fission dans ce circuit et d'autre part de la présence de produits de corrosion qui ont été activés au contact du cœur du réacteur.

Les produits de fission présents dans le circuit primaire ont pu être introduits dans celui-ci lors du chargement du réacteur en éléments combustibles. Les gaines de ces éléments renfermant le matériau combustible peuvent être contaminées par des produits de fission, pendant la fabrication des éléments combustibles.

Les produits de fission peuvent également provenir de l'intérieur du crayon combustible et s'échapper par des fissures de la gaine pendant le fonctionnement du réacteur.

La radio-activité due aux produits de corrosion peut être limitée par un choix judicieux des matériaux constituant le circuit primaire et les autres circuits en contact avec le fluide primaire. En particulier, on choisit des matériaux comportant une faible teneur en éléments s'activant fortement tels que le cobalt. On peut également réduire la radio-activité due aux produits de corrosion en utilisant des moyens d'épuration du fluide primaire tels que des filtres ou des colonnes renfermant des résines.

On réduit également la quantité de produits de corrosion formés dans le circuit primaire par l'eau de refroidissement en diminuant son pouvoir corrosif par introduction d'une base de conditionnement telle que la lithine.

L'introduction de cette base dans le fluide primaire, par exemple au niveau du circuit de contrôle volumétrique et chimique du réacteur, permet un certain ajustement du pH de l'eau du circuit primaire, en fonction par exemple de la quantité d'acide borique introduite dans le fluide primaire pour la conduite du réacteur.

Cependant, on n'a jamais pu contrôler en continu et de façon très précise les caractéristiques chimiques du fluide primaire pendant le fonctionnement du réacteur.

En effet, ce contrôle précis et continu des caractéristiques chimiques du fluide primaire du réacteur en fonctionnement est rendu difficile par le fait que la concentration en acide borique est variable au cours du temps et par le fait que la concentration en lithine est également variable puisque, d'une part cette concentration en lithine varie lorsqu'on modifie la concentration en acide borique et que, d'autre part, du lithium est engendré in situ, par réaction nucléaire sur le bore, à l'intérieur du fluide primaire. Cette formation de lithium est proportionnelle à la concentration en bore qui est elle-même variable.

En particulier, on ne connaissait pas de procédé permettant de contrôler parfaitement le pH à haute température de l'eau de refroidissement du réacteur, constituant le fluide primaire.

Le but de l'invention est donc de proposer un procédé de réglage du pH de l'eau de refroidissement d'un réacteur nucléaire à eau sous pression, cette eau de refroidissement à haute température et à haute pression contenant, outre certaines impuretés inévitables, de l'acide borique en quantités variables dans le temps et une base de conditionnement, ce procédé de réglage permettant d'obtenir à chaque instant, pendant le fonctionnement du réacteur, une valeur du pH à haute température de l'eau de refroidissement conduisant soit à une formation réduite de produits de corrosion, soit à une activation réduite de ces produits de corrosion.

Dans ce but, on mesure en continu la concentration de l'eau de refroidissement en acide borique et l'un des deux paramètres : pH à température ambiante et concentration en base de conditionnement de cette eau de refroidissement,

on calcule la concentration en base de conditionnement de l'eau de refroidissement nécessaire pour obtenir une valeur du pH à haute température de l'eau de refroidissement égale à une valeur prédéterminée, à partir de la concentration en acide borique et du second paramètre (pH à température ambiante ou concentration en base de conditionnement),

on compare la valeur de la concentration en base de conditionnement nécessaire pour l'obtention du pH voulu à haute température à la valeur réelle mesurée ou calculée de cette concentration dans l'eau de refroidissement, et, suivant le cas où l'écart entre la concentration nécessaire et la concentration réelle est supérieur ou inférieur à deux limites prédéterminées,

on calcule la quantité de base de conditionnement à ajouter ou à enlever dans l'eau de refroidissement pour obtenir la concentration voulue,

on effectue une injection ou un prélèvement de base de conditionnement dans l'eau de refroidissement pour introduire ou enlever la quantité calculée de base de conditionnement.

Afin de bien faire comprendre l'invention, on va maintenant décrire à titre d'exemple non limitatif, en se reportant aux figures jointes en annexe, un dispositif de réglage du pH du fluide primaire d'un réacteur à eau sous pression et sa mise en œuvre selon le procédé de l'invention, pour le réglage du pH de l'eau de refroidissement du réacteur.

La figure 1 représente schématiquement un dispositif de réglage du pH de l'eau de refroidissement primaire d'un réacteur nucléaire à eau sous pression, incorporé au circuit de contrôle volumétrique et chimique de ce réacteur.

La figure 2 représente de façon schématique un dispositif de mesure de la concentration en acide borique de l'eau de refroidissement d'un réacteur nucléaire constituant l'un des éléments du dispositif représenté à la figure 1.

La figure 3 représente, de façon schématique, une variante de réalisation du dispositif de réglage de pH de l'eau de refroidissement du circuit primaire d'un réacteur nucléaire à eau sous pression, ce dispositif étant partiellement indépendant du circuit de contrôle volumétrique et chimique du réacteur.

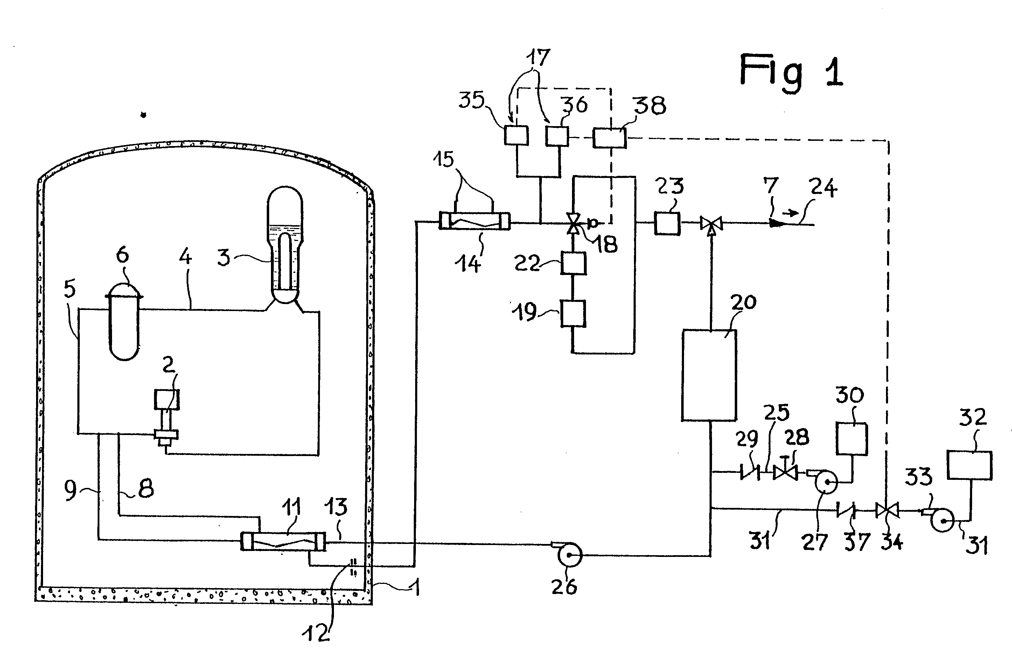

Sur la figure 1, on a représenté schématiquement une boucle du circuit primaire d'un réacteur nucléaire à eau sous pression contenue à l'intérieur de l'enceinte de sécurité 1 du réacteur et comportant une pompe primaire 2, un échangeur de chaleur 3 et des conduites telles que 4 et 5 permettant de relier ces éléments entre eux et à la cuve 6 du réacteur nucléaire à l'intérieur de laquelle se trouve le cœur constitué par les assemblages combustibles. Le circuit primaire du réacteur est rempli d'eau sous pression et à haute température en circulation continue dans ce circuit, pour le refroidissement du cœur du réacteur et la vaporisation d'eau alimentaire au niveau du générateur de vapeur 3.

Sur ce circuit primaire sont placées en dérivation les conduites 8 et 9 du circuit de contrôle volumétrique et chimique du réacteur, permettant respectivement le prélèvement et la réintroduction d'eau de refroidissement dans le circuit primaire, pour ajuster la masse d'eau contenue dans le circuit primaire, maintenir la qualité chimique de cette eau suivant les spécifications requises et pour régler la concentration en acide borique pour le contrôle de réactivité du réacteur.

L'eau prélevée dans le circuit primaire par la conduite 8 passe dans un échangeur de chaleur 11 placé à l'intérieur de l'enceinte de sécurité où elle se refroidit par échange de chaleur avec l'eau de refroidissement réinjectée dans le circuit primaire par les conduites 9 et 13.

L'eau primaire prélevée par la conduite 8 passe à sa sortie de l'échangeur 11 dans un dispositif de détente 12 où sa pression est ramenée à une valeur faible.

Le fluide primaire dépressurisé est alors envoyé à l'extérieur de l'enceinte dans un second échangeur de chaleur 14 où elle est refroidie à la température ambiante grâce à un circuit 15 amenant de l'eau de réfrigération à l'échangeur 14.

A la sortie de l'échangeur de chaleur 14, une partie de l'eau refroidie et dépressurisée est prélevée et envoyée à une chaîne de mesure 17.

La circulation de l'eau de refroidissement prélevée dans les appareils de mesure constituant la chaîne de mesure 17 est continue si bien que ces appareils peuvent fournir en continu des valeurs des caractéristiques du fluide de refroidissement.

Le fluide de refroidissement, après sa sortie de l'échangeur de chaleur 14, est envoyé grâce à un robinet à trois voies 18, soit directement, soit après passage dans une unité de déminéralisation 19, dans un réservoir 20 faisant office de réservoir tampon.

Des filtres 22 et 23 permettent d'arrêter les impuretés éventuellement entraînées par le fluide primaire, avant son passage dans l'unité de déminéralisation 19 et avant son arrivée dans le réservoir 20.

Un circuit 24 permet d'extraire de l'eau de refroidissement et un circuit 25 permet au contraire l'injection d'eau de refroidissement renfermant de l'acide borique en quantité variable, dans la branche de retour 13 du circuit de contrôle volumétrique et chimique.

Sur cette branche 13 est placée une pompe de charge 26 permettant d'élever la pression du fluide primaire avant sa réinjection dans le circuit par l'intermédiaire de l'échangeur de chaleur 11 et de la conduite 9.

Le circuit 25 comporte une pompe d'injection 27, un réservoir 30, une vanne 28 et un clapet anti-retour 29.

La capacité 30 peut être alimentée en eau renfermant une quantité d'acide borique variable.

De cette façon le circuit 25 permet d'effectuer l'injection d'une solution d'acide borique plus ou moins concentrée pour le réglage de la capacité d'absorption du fluide primaire c'est-à-dire pour le réglage de la réactivité du réacteur.

Les circuits 24 et 25 permettent également d'ajuster la masse d'eau contenue dans le circuit primaire.

Le maintien de la qualité chimique de l'eau primaire est assuré grâce au déminéraliseur 19 et aux filtres 22 et 23.

Un circuit d'injection de base de conditionnement 31 comporte un réservoir 32 renfermant une solution de lithine, une pompe d'injection 33, une vanne 34 et un clapet anti-retour 37. Ce circuit 31 permet l'injection d'une quantité réglée de base de conditionnement dans la branche de retour 13 du circuit de contrôle volumétrique et chimique.

La chaîne de mesure 17 comporte un dispositif 35 de mesure de la concentration en bore de l'eau du circuit primaire et un dispositif de mesure du pH 36, les appareils de mesure 35 et 36 fournissant en continu un résultat de mesure sous forme d'un signal électrique, les deux signaux étant envoyés sur une unité de calcul 38 fournissant en sortie des signaux de commande agissant sur le robinet à trois voies 18 et sur la vanne 34 du circuit 31 d'injection de base de conditionnement dans le circuit primaire.

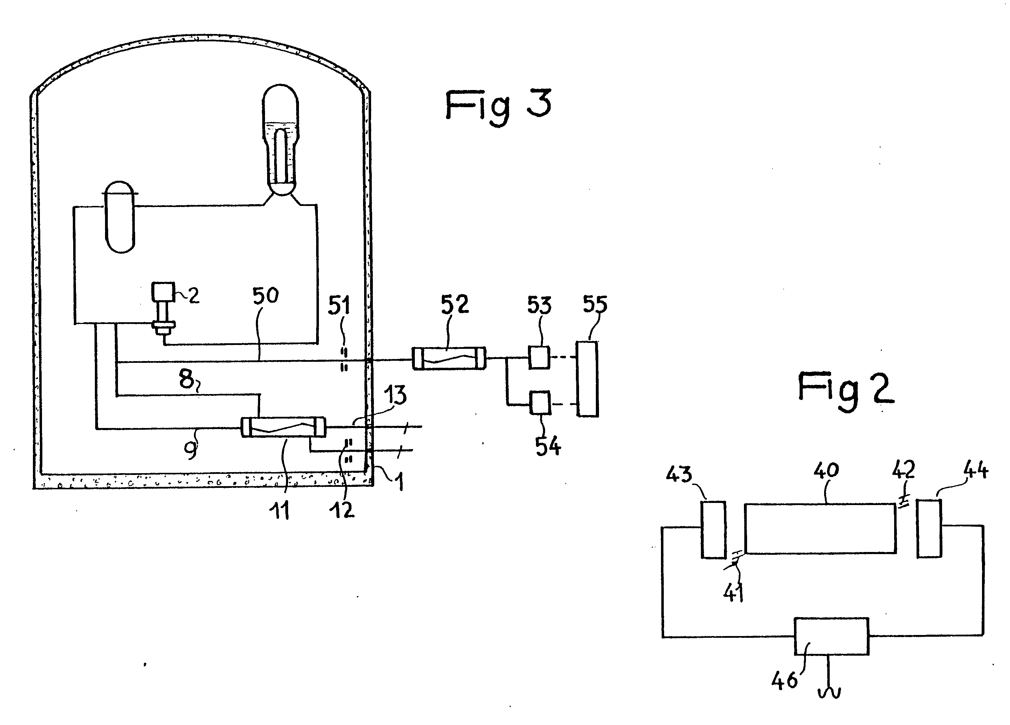

Le dispositif 35 de mesure de la concentration en bore est un dispositif à absorption de neutrons qui a été représenté à la figure 2.

Ce dispositif comporte une cuve 40 dans laquelle circule l'eau de refroidissement dépressurisée et refroidie prélevée à la sortie de l'échangeur de chaleur 14.

Cette eau entre dans la cuve par une conduite 41 et ressort de celle-ci par une conduite 42. D'un côté de la cuve est disposé un émetteur de neutrons 43 et de l'autre côté de la cuve, un récepteur de neutrons 44.

Les neutrons émis par la source 43 sont absorbés en partie par le bore 10 présent dans la solution d'acide borique.

Le détecteur de neutrons 44 émet un courant de sortie qui est inversement proportionnel à la quantité de bore 10 contenue dans l'eau de refroidissement et donc à la quantité d'acide borique contenue dans cette eau.

Ce courant de sortie est traité dans une unité de calcul 46 qui fournit en sortie un signal proportionnel à la concentration en acide borique dans l'eau de refroidissement analysée. C'est ce signal qui est envoyé à l'unité de calcul 38.

Le dispositif de mesure de pH 36 est constitué d'une manière classique par une cellule de mesure dans laquelle circule l'eau de refroidissement prélevée, une électrode spécifique des ions H$^+$ et un voltmètre qui fournit un signal représentatif du pH de l'eau de refroidissement à température ambiante.

De façon classique, la température de l'eau de refroidissement est régulée à 25° pour obtenir des mesures du pH, au cours du temps, comparables.

Le signal représentatif du pH à 25° de l'eau de refroidissement est envoyé à l'unité de calcul 38.

L'unité de calcul 38 comporte un ensemble de modules permettant le calcul et l'élaboration de signaux représentatifs de divers paramètres.

Un premier module permet de déterminer la concentration en ions lithium dans l'eau de refroidissement, ces ions lithium correspondant à la base de conditionnement du fluide primaire qui est de la lithine.

Cette détermination est effectuée à partir de la connaissance du pH à 25° mesuré par le dispositif 36 et à partir de la concentration en bore mesurée par le dispositif 35.

Un second module permet de calculer et d'élaborer un signal correspondant à la concentration en ions lithium ou en lithine, nécessaire pour obtenir une valeur du pH à la température de l'eau de refroidissement dans le circuit primaire c'est-à-dire approximativement 320°, correspondant à la valeur choisie par l'exploitant de la centrale, dans le but de diminuer l'activation des produits de corrosion contenus dans le circuit primaire.

Cette concentration en lithium pour obtenir le pH désiré à haute température est calculée à partir de la concentration en bore et du pH à 25° de l'eau de refroidissement.

L'exploitant peut choisir de maintenir le pH de l'eau de refroidissement, pendant le fonctionnement du réacteur, à une valeur fixe, choisie pour obtenir un dépôt des produits de corrosion à un endroit déterminé du circuit primaire du réacteur.

En effet, il existe une relation entre la solubilité des produits de corrosion dans l'eau de refroidissement du circuit primaire et la température qui se traduit par un minimum de solubilité pour une certaine valeur de la température.

Cette relation varie en fonction du pH si bien que le minimum de solubilité des produits de corrosion est atteint pour une température variant avec le pH.

D'autre part, l'eau du circuit primaire a une température variable à l'intérieur de ce circuit, puisque cette eau est échauffée au contact du cœur du réacteur et est refroidie à l'intérieur des générateurs de vapeur.

En choisissant une valeur du pH particulière, il est donc possible d'obtenir un minimum de solubilité et un dépôt des produits de corrosion dans une zone particulière du circuit primaire.

Le choix de la zone du circuit primaire dans laquelle doit s'effectuer le dépôt des produits de corrosion correspond à une zone dans laquelle les équipes d'entretien du réacteur n'interviennent pas.

L'exploitant peut également choisir un programme de réglage du pH où celui-ci est variable au cours du cycle de fonctionnement du réacteur nucléaire.

Par exemple, il peut être intéressant de choisir en début de cycle de fonctionnement un pH correspondant à un dépôt préférentiel des produits de corrosion en dehors du cœur, ce qui limite leur activation par les réactions nucléaires. En fin de cycle, en revanche, on choisira un pH correspondant à un dépôt préférentiel des produits de corrosion sur le cœur ce qui évite leur présence dans les zones telles que les boîtes à eau des générateurs de vapeur où le personnel d'entretien est amené à intervenir, après l'arrêt du réacteur.

Dans tous les cas, on calcule à chaque instant, la concentration en lithine de l'eau de refroidissement nécessaire pour obtenir le pH à haute température voulu par l'exploitant.

Un troisième module de l'ensemble de calcul 38 permet de comparer la concentration en lithine déterminée par le premier module, c'est-à-dire la concentration réelle en lithine dans l'eau de refroidissement, à la concentration nécessaire pour obtenir le pH voulu, déterminée par le second module.

Un quatrième module constitue un dispositif de régulation qui est mis en fonctionnement lorsque l'écart entre la concentration réelle et la concentration voulue de l'eau de refroidissement, en base de conditionnement, dépasse une certaine limite prédéterminée.

Ce quatrième module détermine par calcul la quantité de base de conditionnement à ajouter ou à enlever dans l'eau de refroidissement pour obtenir la concentration voulue pour l'obtention du pH à haute température correspondant au programme choisi.

Dans le cas de l'eau de refroidissement du réacteur à eau sous pression dont le pH est réglé par le dispositif représenté à la figure 1, les conditions de fonctionnement du module de régulation ont été choisies de la façon suivante :

Si la concentration réelle en base de conditionnement de l'eau de refroidissement est supérieure à 1,1 fois la concentration voulue calculée, un signal est envoyé au robinet à trois voies 18 dont l'ouverture est choisie pour permettre de faire passer une fraction du débit du fluide primaire à travers le dispositif de déminéralisation à résine cationique 19, le temps de passage du fluide étant déterminé par le module de régulation de façon que la quantité d'ions lithium de la lithine retenue sur le dispositif de déminéralisation permette d'abaisser la concentration existante jusqu'à la concentration voulue.

Si la concentration réelle en base de conditionnement de l'eau de refroidissement est comprise entre 1,1 et 0,9 fois la concentration voulue, aucune correction n'est entreprise et le module de régulation ne se met pas en fonctionnement.

Si la concentration réelle en base de conditionnement de l'eau de refroidissement est inférieure à 0,9 fois la concentration voulue, un signal est envoyé vers le circuit 31, pour l'ouverture de la vanne 34 et la mise en fonctionnement de la pompe d'injection 33 de la solution de lithine contenue dans la réserve 32. Le temps de fonctionnement de la pompe 33 est déterminé par le module de régulation de façon que la quantité de lithine injectée permette d'augmenter la concentration en ions lithium dans l'eau de refroidissement jusqu'à ce que cette concentration soit égale à la concentration voulue calculée.

Ainsi le pH à haute température de l'eau de refroidissement peut être maintenu à une valeur parfaitement constante, pendant toute l'exploitation du réacteur nucléaire.

On pourrait également utiliser le dispositif représenté à la figure 1 pour assurer un pH à haute température variable pendant le fonctionnement du réacteur, suivant un programme prédéterminé. Par exemple, on pourrait maintenir en début de cycle un pH correspondant à un dépôt préférentiel des produits de corrosion en dehors du cœur et maintenir en fin de cycle un pH correspondant à un dépôt préférentiel des produits de corrosion sur le cœur.

Les valeurs du pH en début et en fin de cycle sont déterminées à partir des courbes de solubilité des produits de corrosion en fonction de la température et suivant le pH ainsi que par la considération des températures du fluide de refroidissement au voisinage du cœur et dans les zones les plus froides.

Sur la figure 3 on voit un mode de réalisation du dispositif permettant la mise en œuvre du procédé suivant l'invention où le dispositif de réglage est indépendant du circuit de contrôle volumétrique et chimique du réacteur.

Les éléments correspondants portent les mêmes repères sur les figures 1 et 3.

Le prélèvement pour les mesures du pH à température ambiante et de concentration en bore est effectué au moyen d'une conduite 50 sur laquelle est disposé un détendeur 51 à l'intérieur de l'enceinte et un échangeur 52 pour le refroidissement du prélèvement, à l'extérieur de l'enceinte.

On utilise comme précédemment un dispositif de mesure de la teneur en bore 53 et un dispositif de mesure du pH à température ambiante 54.

Une unité de calcul et de régulation 55 comporte un ensemble de modules permettant la détermination de la quantité de lithine à injecter ou à enlever dans le fluide de refroidissement, soit au niveau du circuit de contrôle volumétrique et chimique, soit à un autre endroit du circuit primaire.

On voit donc que les principaux avantages du procédé suivant l'invention sont de permettre un réglage rigoureux du pH à haute température permettant en particulier de réduire fortement soit la quantité des produits de corrosion soit leur activation.

L'invention ne se limite pas au mode de réalisation qui vient d'être décrit ; elle en comporte au contraire toutes les variantes.

C'est ainsi qu'on peut utiliser d'autres bases de conditionnement que la lithine, ces bases pouvant être, par exemple, la potasse ou l'ammoniaque. Il faut, dans ce cas, modifier les programmes de calcul de l'unité de calcul 38 en fonction de la base choisie.

On peut également se trouver en présence de plusieurs bases dans l'eau de refroidissement dont il faut tenir compte dans les calculs de pH.

Dans l'exemple de réalisation qui vient d'être décrit, la concentration en lithine, c'est-à-dire en ions lithium de l'eau de refroidissement, est déterminée au moyen d'un module de calcul à partir du pH à 25° et de la concentration en acide borique de l'eau de refroidissement.

On pourrait également mesurer directement la concentration en lithium dans l'eau de refroidissement, au lieu du pH à 25° et supprimer ainsi le premier module de calcul.

En revanche, la concentration en acide borique est un paramètre qui est toujours mesuré dans la conduite des réacteurs à eau sous pression et ce paramètre est toujours utilisé pour les calculs nécessaires pour le réglage du pH à haute température.

Il est bien évident également qu'on peut utiliser des dispositifs d'un type quelconque pour mesurer la teneur en acide borique, le pH à température ambiante et la teneur en base de conditionnement de l'eau de refroidissement.

Les valeurs limites des écarts entre la valeur calculée de la concentration nécessaire en base de conditionnement pour l'obtention d'un pH voulu et la concentration réelle mesurée ou calculée sont choisies en fonction des conditions d'exploitation et en particulier un choix judicieux de ces valeurs limites des écarts permet d'utiliser une réserve de base de conditionnement de faible volume et une unité de déminéralisation de faible capacité.

Le procédé suivant l'invention permet de suivre un programme quelconque en ce qui concerne la valeur du pH, au cours du fonctionnement du réacteur, par exemple, dans le but de limiter la formation et la contamination radio-active des produits de corrosion.

Enfin, l'invention s'applique à tous les réacteurs nucléaires à eau sous pression utilisant de l'acide borique pour la conduite du réacteur et une base de conditionnement pour le réglage des propriétés chimiques de l'eau de refroidissement.

**Revendications**

1. Procédé de réglage du pH de l'eau de refroidissement d'un réacteur nucléaire à eau sous pression, cette eau de refroidissement à haute température et à haute pression contenant, outre certaines impuretés inévitables, de l'acide borique en quantités variables dans le temps, et une base de conditionnement,
caractérisé par le fait :

qu'on mesure en continu la concentration de l'eau de refroidissement en acide borique et l'un des deux paramètres : pH à température ambiante et concentration en base de conditionnement de cette eau de refroidissement,

qu'on calcule la concentration en base de conditionnement de l'eau de refroidissement nécessaire pour obtenir une valeur de pH à haute température de l'eau de refroidissement égale à une valeur prédéterminée, à partir de la concentration en acide borique et du second paramètre (pH à température ambiante ou concentration en base de conditionnement),

qu'on compare la valeur de la concentration en base de conditionnement nécessaire pour l'obtention du pH voulu à haute température à la valeur réelle mesurée ou calculée de cette concentration dans l'eau de refroidissement,

et que, suivant le cas où l'écart entre la concentration nécessaire et la concentration réelle est supérieur ou inférieur à deux limites prédéterminées :

on calcule la quantité de base de conditionnement à ajouter ou à enlever dans l'eau de refroidissement pour obtenir la concentration voulue,

on effectue une injection ou un prélèvement de base de conditionnement dans l'eau de refroidissement pour introduire ou enlever la quantité calculée de base de conditionnement.

2. Procédé de réglage suivant la revendication 1, caractérisé par le fait :

qu'on mesure, outre la concentration de l'eau de refroidissement en acide borique, le pH à température ambiante de cette eau de refroidissement,

et qu'on calcule la valeur réelle de la concentration en base de conditionnement à partir de ces deux paramètres mesurés.

3. Procédé de réglage du pH suivant la revendication 1, caractérisé par le fait :

qu'on mesure en continu, outre la concentration de l'eau de refroidissement en acide borique, la concentration en base de conditionnement.

et qu'on calcule la concentration en base de conditionnement de l'eau de refroidissement nécessaire pour obtenir une valeur du pH à haute température de l'eau de refroidissement égale à une valeur prédéterminée, à partir de ces deux paramètres.

4. Procédé de réglage suivant l'une quelconque des revendications 1, 2 et 3, caractérisé par le fait que la teneur en acide borique de l'eau de refroidissement est mesurée par une méthode d'absorption des neutrons dans l'eau de refroidissement.

5. Procédé suivant l'une quelconque des revendications 1, 2, 3 et 4, caractérisé par le fait que le pH est maintenu constant pendant tout le cycle de fonctionnement du réacteur.

6. Procédé de réglage suivant l'une quelconque des revendications 1, 2, 3 et 4, caractérisé par le fait que le pH est maintenu à une certaine valeur pendant le début du cycle de fonctionnement du réacteur et à une autre valeur à la fin du cycle de fonctionnement de celui-ci.

7. Dispositif de réglage du pH de l'eau de refroidissement d'un réacteur nucléaire à eau sous pression, caractérisé par le fait qu'il comporte un dispositif (35) de mesure de la teneur en acide borique et un dispositif de mesure de pH (36) disposés en dérivation sur le circuit de contrôle volumétrique et chimique du réacteur, dans une partie de ce circuit où l'eau de refroidissement a été refroidie et dépressurisée et une unité de calcul (38) comportant un module de calcul de la concentration en base de conditionnement de l'eau de refroidissement à partir de la mesure de la teneur en acide borique et du pH à température ambiante de l'eau de refroidissement, un module de calcul de la concentration en base de conditionnement nécessaire pour obtenir un pH prédéterminé, un module de calcul permettant la comparaison de la valeur réelle calculée de la teneur en base de conditionnement et la valeur souhaitée obtenue par le calcul et un module de régulation permettant de calculer la quantité de base de conditionnement à enlever ou à ajouter dans l'eau de refroidissement et la commande de la chaîne de régulation comportant :

un robinet (18) à plusieurs voies pour la mise en circulation d'une partie au moins de l'eau de refroidissement dans une branche comportant une unité de déminéralisation (19),

et un circuit d'injection de base de conditionnement (31) comportant une vanne d'ouverture (34) et une pompe d'injection (33).

8. Dispositif de réglage du pH de l'eau de refroidissement d'un réacteur nucléaire à eau sous pression, caractérisé par le fait qu'il comporte un dispositif de mesure de la concentration en acide borique (53) et un dispositif de mesure de pH (54) reliés à une unité de calcul (55) disposés sur un circuit en communication avec le circuit primaire du réacteur par l'intermédiaire d'une conduite (50) sur laquelle sont placés un dispositif de dépressurisation (51) et un échangeur de chaleur (52), l'unité de calcul (55) comportant un module de régulation pour la commande d'une unité de déminéralisation ou d'une pompe d'injection de base de conditionnement dans le circuit primaire.

9. Dispositif suivant l'une quelconque des revendications 7 et 8, caractérisé par le fait que le dispositif de mesure de la concentration en acide borique comporte une cuve (40) pour la circulation de l'eau de refroidissement, un émetteur (43) et un récepteur (44) de neutrons disposés chacun à une extrémité de cette cuve (40) et une unité de traitement (46) du signal émis par le récepteur de neutrons en réponse à une émission de neutrons à travers la cuve (40) du dispositif.

## Claims

1. Process for the regulation of the pH of the cooling water of a pressurised-water nuclear reactor, this high temperature, high pressure cooling water containing, in addition to certain unavoidable impurities, boric acid in amounts varying with time, and also a conditioning base, characterised by the fact that :

the boric acid concentration of the cooling water and one of two parameters, namely either the pH at ambient temperature or the conditioning base concentration of the cooling water, are continuously measured,

the conditioning base concentration of the cooling water, which is necessary to obtain a high temperature pH value of the cooling water equal to a predetermined value, is calculated from the boric acid concentration and the second parameter (pH at ambient temperature or conditioning base concentration),

the value of the conditioning base concentration necessary for obtaining the desired high temperature pH is compared with the actual measured or calculated value of that concentration in the cooling water,

and that, according to the case where the difference between the necessary concentration and the actual concentration is higher or lower than two predetermined limits :

the amount of conditioning base to be added to or removed from the cooling water in order to obtain the desired concentration is calculated, and

conditioning base is injected into or taken from the cooling water in order to introduce or remove the calculated amount of conditioning base.

2. Regulation process according to Claim 1, characterised by the fact that :

in addition to the boric acid concentration of the cooling water, the pH at ambient temperature of this cooling water is measured, and

the actual value of the concentration of conditioning base is calculated from these two measured parameters.

3. Process for the regulation of pH according to Claim 1, characterised by the fact that :

. in addition to the boric acid concentration of the cooling water, the concentration of conditioning base is continuously measured, and that

the concentration of conditioning base in the cooling water necessary for obtaining a value of the pH at high temperature of the cooling water equal to a predetermined value is calculated from these two parameters.

4. Regulation process according to any one of Claims 1, 2 and 3, characterised by the fact that the boric acid content of the cooling water is measured by a method of absorbing neutrons in the cooling water.

5. Process according to any one of Claims 1, 2, 3 and 4, characterised by the fact that the pH is kept constant throughout the entire operating cycle of the reactor.

6. Regulation process according to any one of Claims 1, 2, 3 and 4, characterised by the fact that the pH is kept at a certain value during the commencement of the operating cycle of the reactor and at a different value at the end of the operation of the reactor.

7. Apparatus for regulating the pH of the cooling water of a pressurised-water nuclear reactor, characterised by the fact that it comprises a device (35) for measuring the boric acid content and a pH measuring device (36), which devices are disposed on a derivation of the volumetric and chemical control circuit of the reactor, in a part of that circuit in which the cooling water has been cooled and depressurised, and a computer unit (38) comprising a module calculating the conditioning base concentration of the cooling water from the measurement of the boric acid content and the pH at ambient temperature of the cooling water, a module calculating the concentration of conditioning base necessary for obtaining a predetermined pH, a computer module permitting comparison of the actual calculated value of the conditioning base content and the desired value obtained by the calculation, and a regulation module permitting calculation of the amount of conditioning base to be removed from or added to the cooling water, and a control system for the regulation chain, comprising :

a multiway valve (18) for circulating at least a part of the cooling water in a branch containing a demineralisation unit (19), and

an injection circuit (31) for conditioning base, comprising an opening valve (34) and an injection pump (33).

8. Apparatus for regulating the pH of the cooling water of a pressurised-water nuclear reactor, characterised by the fact that it comprises a device (53) measuring the boric acid concentration and a pH measuring device (54), which devices are connected to a computer unit (55) disposed on a circuit in communication with the primary circuit of the reactor by way of a pipe (50) on which are mounted a depressurisation device (51) and a heat exchanger (52), the computer unit (55) comprising a regulation module for controlling a demineralisation unit or a pump for injecting conditioning base into the primary circuit.

9. Apparatus according to any one of Claims 7 and 8, characterised by the fact that the device measuring the concentration of boric acid comprises a tank (40) for the circulation of the cooling water, a neutron transmitter (43) and a neutron received (44), the transmitter and the receiver being each disposed at one end of the said tank (40), and a unit (40) for the processing of the signal transmitted by the neutron receiver in response to a transmission of neutrons through the tank (40) of the apparatus.

## Patentansprüche

1. Verfahren zur Regelung des pH-Wertes des Kühlwassers eines Druckwasser-Kernreaktors, welches Kühlwasser auf hoher Temperatur und auf hohem Druck außer gewissen unvermeidlichen Verunreinigungen Borsäure in mit der Zeit veränderlichen Mengen und eine Konditionierungsbase enthält,
dadurch gekennzeichnet,
daß man kontinuierlich die Konzentration des Kühlwassers an Borsäure und einen der zwei Parameter: pH-Wert bei Raumtemperatur und Konzentration an Konditionierungsbase dieses Kühlwassers mißt,
daß man die Konzentration an Konditionierungsbase des Kühlwassers, die zum Erhalten eines einem vorbestimmten Wert gleichen pH-Wertes des Kühlwassers bei hoher Temperatur erforderlich ist, ausgehend von der Konzentration an Borsäure und vom zweiten Parameter: pH-Wert bei Raumtemperatur oder Konzentration an Konditionierungsbase berechnet,
daß man den zum Erhalten des bei hoher Temperatur gewünschten pH-Wertes erforderlichen Wert der Konzentration an Konditionierungsbase mit dem gemessenen oder berechneten tatsächlichen Wert dieser Konzentration im Kühlwasser vergleicht,
und daß man je nach dem Fall, wo die Abweichung zwischen der erforderlichen Konzentration und der tatsächlichen Konzentration über oder unter zwei vorbestimmten Grenzen ist,
die dem Kühlwasser zum Erhalten der gewünschten Konzentration zuzusetzende oder zu entnehmende Konditionierungsbasenmenge berechnet und
eine Einführung oder Entnahme von Konditionierungsbase in das bzw. aus dem Kühlwasser zum Einführen oder Entnehmen der berechneten Konditionierungsbasenmenge vornimmt.

2. Regelungsverfahren nach Anspruch 1, dadurch gekennzeichnet,
daß man außer der Konzentration des Kühlwassers an Borsäure den pH-Wert dieses Kühlwassers bei Raumtemperatur mißt
und daß man den tatsächlichen Wert der Konzentration an Konditionierungsbase ausgehend von diesen beiden gemessenen Parametern berechnet.

3. Regelungsverfahren nach Anspruch 1, dadurch gekennzeichnet,
daß man kontinuierlich außer der Konzentration des Kühlwassers an Borsäure die Konzentration an Konditionierungsbase mißt
und daß man die Konzentration des Kühlwassers an Konditionierungsbase, die zum Erhalten eines einem vorbestimmten Wert gleichen pH-Werts bei hoher Temperatur des Kühlwassers erforderlich ist, ausgehend von diesen zwei Parametern berechnet.

4. Regelungsverfahren nach irgendeinem der Ansprüche 1, 2 und 3, dadurch gekennzeichnet, daß der Gehalt des Kühlwassers an Borsäure durch eine Methode zur Absorption der Neutronen im Kühlwasser gemessen wird.

5. Verfahren nach irgendeinem der Ansprüche 1, 2, 3 und 4, dadurch gekennzeichnet, daß der pH-Wert während des ganzen Betriebszyklus' des Reaktors konstant gehalten wird.

6. Regelungsverfahren nach irgendeinem der Ansprüche 1, 2, 3 und 4, dadurch gekennzeichnet, daß der pH-Wert während des Beginns des Betriebszyklus' des Reaktors auf einem bestimmten Wert und am Ende des Betriebszyklus' desselben auf einem anderen Wert gehalten wird.

7. Vorrichtung zur Regelung des pH-Wertes des Kühlwassers eines Druckwasser-Kernreaktors, dadurch gekennzeichnet, daß sie eine Einrichtung (35) zum Messen des Gehalts an Borsäure und eine Einrichtung (36) zum Messen des pH-Werts, die in Abzweigung am Kreis zur volumetrischen und chemischen Steuerung des Reaktors in einem Teil dieses Kreises, wo das Kühlwasser abgekühlt und entspannt worden ist, angeordnet sind, und eine Recheneinheit (38) aufweist, die einen Modul zum Errechnen der Konzentration des Kühlwassers an Konditionierungsbase ausgehend von der Messung des Gehalts an Borsäure und des pH-Werts des Kühlwassers bei Raumtemperatur, einem Modul zum Errechnen der zum Erhalten eines vorbestimmten pH-Werts erforderlichen Konzentration an Konditionierungsbase, einen Rechenmodul, der den Vergleich des errechneten tatsächlichen Wertes des Gehalts an Konditionierungsbase und des durch die Berechnung erhaltenen gewünschten Wertes ermöglicht, und einen Regelungsmodul aufweist, der das Errechnen der dem Kühlwasser zu entnehmenden oder zuzusetzenden Konditionierungsbasenmenge ermöglicht, und daß die Steuerung der Regelungskette aufweist:
einen Mehrweghahn (18) zum Bringen wenigstens eines Teiles des Kühlwassers in Zirkulation in einem Zweig mit einer Entmineralisierungseinheit (19)
und einen Kreis (31) zum Einführen von Konditionierungsbase mit einem Öffnungsventil (34) und einer Einspritzpumpe (33).

8. Vorrichtung zur Regelung des pH-Wertes des Kühlwassers eines Druckwasser-Kernreaktors, dadurch gekennzeichnet, daß sie eine Einrichtung (53) zum Messen der Konzentration an Borsäure und eine Einrichtung (54) zum Messen des pH-Werts aufweist, die mit einer Recheneinheit (55) verbunden und an einem Kreis in Verbindung mit dem Primärkreis des Reaktors mittels einer Leitung (50) angeordnet sind, ·an der eine Entspannungseinrichtung (51) und ein Wärmeaustauscher (52) angeordnet sind, und daß die Recheneinheit (55) einen Regelungsmodul zur Steuerung einer Entmineralisierungseinheit oder einer Pumpe zum Einspritzen von Konditionierungsbase in den Primärkreis aufweist.

9. Vorrichtung nach irgendeinem der Ansprüche 7 und 8, dadurch gekennzeichnet, daß die Einrichtung zum Messen der Konzentration an Borsäure eine Wanne (40) für die Zirkulation des Kühlwassers, einen Strahler (43) und einen Empfänger (44) von Neutronen, deren jeder an einem Ende dieser Wanne (40) angeordnet ist, und eine Einheit (46) zur Behandlung des vom Neutronenempfänger im Ansprechen auf eine Neutronenemission durch die Wanne (40) der Vorrichtung abgegebenen Signals.

Fig 1

Fig 3

Fig 2

0 094 884